# EUROPEAN PATENT APPLICATION

(11) **EP 4 661 231 A1**
(43) Date of publication of application: **10.12.2025**
(21) Application number: 24750422.8
(22) Date of filing: 02.02.2024
(51) Int. Cl.: H02J 1/12, H02J 1/00, H02M 3/00

(54) **POWER CONVERSION DEVICE AND DC POWER SUPPLY SYSTEM**

(30) Priority: 03.02.2023 JP 2023014995
(71) Applicant: OMRON Corporation, Kyoto 600-8530 (JP)
(72) Inventor: DOI, Masashi, Kyoto-shi, Kyoto 600-8530 (JP); TOKUSAKI, Hiroyuki, Kyoto-shi, Kyoto 600-8530 (JP)
(74) Representative: Isarpatent
(86) International application number: PCT/JP2024/003572
(87) International publication number: WO 2024/162473

(57) **Abstract**

Provided is a power conversion device, connected to a load, through a power line, in parallel with other power conversion devices. The power conversion device includes a physical quantity acquiring unit acquiring power or current flowing through the power conversion device, a voltage acquiring unit acquiring a voltage of the power line, and a control unit that controls the voltage. The control unit includes a droop control unit that performs a droop control of drooping the voltage of the power line according to a droop characteristic that defines a relationship between the physical quantity and the voltage, and a correction distribution unit that distributes a correction of the droop characteristic into a correction of a slope of the droop characteristic with respect to the physical quantity and a correction of an intercept that is a predetermined value of the voltage in the droop characteristic with respect to the physical quantity.

## Description

### TECHNICAL FIELD

The present invention relates to a power conversion device and a DC power supply system.

### BACKGROUND OF INVENTION

In the related art, parallel operation control in a DC power supply system that supplies DC power by using a plurality of converters with storage batteries as power sources is broadly categorized into a master-slave method and a droop control method. Of these methods, the droop control method imparts a droop characteristic to the control target value of an output voltage of each converter based on an output current thereof. This allows for the design of a highly scalable system where a load current and the output current are autonomously balanced, regardless of increases or decreases in the number of power sources connected in parallel. However, compared to the master-slave method, the droop control method has lower output voltage accuracy and does not allow arbitrary setting of a discharge current of a storage battery.

In contrast, the technology disclosed in Non-Patent Document 1 achieves the leveling of a discharge current of each converter by applying control that corrects the slope of a droop characteristic based on a load factor of each converter. However, since this method corrects only the slope of the droop characteristic, when an error exists in an intercept of the droop characteristic, the slope of the droop characteristic may be excessively corrected under light load conditions. As a result, the droop characteristics are not uniform during load fluctuations, thus leading to the issue of output current overshooting.

### CITATION LIST

### PATENT LITERATURE

Patent Document 1: Specification of Chinese Patent No. 103377842

### NON-PATENT LITERATURE

Non-Patent Document 1: IEEE Transaction on Power Electronics, Vol. 31, No. 9, Sep. 2016 "An Improved Distributed Secondary Control Method for DC Microgrids With Enhanced Dynamic Current Sharing Performance"

### SUMMARY

### TECHNICAL PROBLEM

In view of the above-mentioned problems, an object of the present invention is to provide a droop control technique that can suppress the overshooting of an output current or output power even during load fluctuations.

### SOLUTION TO PROBLEM

To solve the above-mentioned problems, the present invention is a power conversion device connected to a DC power source, configured to step-up, step-up and step-down, or step-down DC power and output the DC power, and connected to a load, through a power line, in parallel with other power conversion devices respectively connected to other DC power sources and configured to step-up, step-up and step-down, or step-down DC power. The power conversion device includes
a physical quantity acquiring unit configured to acquire a physical quantity being power or current flowing through the power conversion device;
a voltage acquiring unit configured to acquire a voltage of the power line; and a control unit configured to control the voltage, wherein
the control unit includes
a droop control unit configured to perform a droop control of drooping the voltage of the power line, according to a droop characteristic defining a relationship between the physical quantity and the voltage; and
a correction distribution unit configured to distribute a correction of the droop characteristic into a correction of a slope of the droop characteristic with respect to the physical quantity and a correction of an intercept being a predetermined value of the voltage in the droop characteristic with respect to the physical quantity.

When the intercept of the droop characteristic varies due to a detection variation of the voltage or the like, the correction of the droop characteristic is performed not only on the slope but also on the slope correction and the intercept correction in a distributed manner, and thus, excessive correction of the slope of the droop characteristic is suppressed. Thus, even when a plurality of power conversion devices are connected in parallel with a load, the overshooting of an output current or output power due to load fluctuations can be suppressed.

The present invention may further include another-device load factor acquiring unit configured to acquire another load factor by dividing the physical quantity flowing through a corresponding one of the other power conversion devices by a rating of the corresponding one of the other power conversion devices, and
the correction distribution unit may distribute the correction of the droop characteristic into the correction of the slope of the droop characteristic with respect to the physical quantity and the correction of the intercept of the droop characteristic, according to a system average load factor obtained by dividing, by a sum of the number of the power conversion device and the other power conversion devices, a sum of the other load factor and a load factor obtained by dividing the physical quantity by a rating of the physical quantity of the power conversion device.

In this way, by distributing the correction of the droop characteristic to the correction of the slope and the correction of the intercept of the droop characteristic according to a system average load factor that is an average load factor of a plurality of power conversion devices including the power conversion device and the other power conversion device operated in parallel with the power conversion device, the droop characteristics of the respective power conversion devices can be made uniform, so that even when the plurality of power conversion devices are connected in parallel with the load, the overshooting of an output current or output power due to load fluctuations can be suppressed.

In the present invention, the correction distribution unit may distribute the correction of the droop characteristic into the correction of the slope of the droop characteristic with respect to the physical quantity and the correction of the intercept of the droop characteristic on the basis of a comparison between a predetermined threshold and the system average load factor, may distribute the correction of the droop characteristic into the correction of the slope of the droop characteristic with respect to the physical quantity and the correction of the intercept of the droop characteristic, according to the system average load factor, or may distribute the correction of the droop characteristic into the correction of the slope and the correction of the intercept of the droop characteristic through a combination thereof.

In the present invention, the control unit may include a correction range limiting unit configured to limit a range of the correction of the droop characteristic.

In this way, by providing the correction range limiting unit that limits the range of the droop characteristic, excessive correction can be suppressed.

The present invention is a DC power supply system including a plurality of power conversion devices each connected to a DC power source, configured to step-up, step-up and step-down, or step-down DC power and supply the DC power to a load, and connected in parallel with the load, wherein
the plurality of power conversion devices include a first-type power conversion device, the first-type power conversion device includes
a physical quantity acquiring unit configured to acquire a first-type physical quantity being power or current flowing through the first-type power conversion device;
a voltage acquiring unit configured to acquire a voltage of a power line configured to connect the first-type power conversion device and the load; and
a control unit configured to control the voltage, and
the control unit includes
a droop control unit configured to perform a droop control of drooping the voltage of the power line, according to a droop characteristic defining a relationship between the first-type physical quantity and the voltage; and
a correction distribution unit configured to distribute a correction of the droop characteristic into a correction of a slope of the droop characteristic with respect to the first-type physical quantity and a correction of an intercept being a predetermined value of the voltage in the droop characteristic with respect to the first-type physical quantity.

When the intercept of the droop characteristic varies due to a detection variation of the voltage or the like, the correction of the droop characteristic is performed not only on the slope but also on the slope correction and the intercept correction in a distributed manner, and thus, excessive correction of the slope of the droop characteristic is suppressed. Thus, in a DC power supply system in which a plurality of power conversion devices including the first-type power conversion device are connected in parallel with the load, the overshooting of an output current or output power during load fluctuations can be suppressed.

In the present invention, the first-type power conversion device may include another-device load factor acquiring unit configured to acquire another load factor by dividing either power or current flowing through a corresponding one of other power conversion devices included in the DC power supply system by a rating of the corresponding one of the other power conversion devices, and
the correction distribution unit may distribute the correction of the droop characteristic into the correction of the slope of the droop characteristic with respect to the first-type physical quantity and the correction of the intercept of the droop characteristic, according to a system average load factor obtained by dividing, by a sum of the number of the power conversion device and the other power conversion devices, a sum of the other load factor and a load factor obtained by dividing the first-type physical quantity by a rating of the first-type physical quantity of the first-type power conversion device.

In this way, by distributing the correction of the droop characteristic to the correction of the slope and the correction of the intercept of the droop characteristic according to a system average load factor that is an average load factor of a plurality of power conversion devices including the first-type power conversion device and the other power conversion device operated in parallel with the first-type power conversion device, the droop characteristics of the respective power conversion devices can be made uniform, so that in a DC power supply system in which the plurality of power conversion devices are connected in parallel with the load, the overshooting of an output current or output power due to load fluctuations can be suppressed.

In the present invention, the correction distribution unit may distribute the correction of the droop characteristic into the correction of the slope of the droop characteristic with respect to the first-type physical quantity and the correction of the intercept of the droop characteristic on the basis of a comparison between a predetermined threshold and the system average load factor, may distribute the correction of the droop characteristic into the correction of the slope of the droop characteristic with respect to the physical quantity and the correction of the intercept of the droop characteristic, according to the system average load factor, or may distribute the correction of the droop characteristic into the correction of the slope and the correction of the intercept of the droop characteristic through a combination thereof.

In the present invention, the control unit may include a correction range limiting unit configured to limit a range of the correction of the droop characteristic.

In this way, by providing the correction range limiting unit that limits the range of the droop characteristic, excessive correction can be suppressed.

In the present invention, the plurality of power conversion devices may include a second-type power conversion device,
the second-type power conversion device may include:
a second-type physical quantity acquiring unit configured to acquire a second-type physical quantity that is power or current flowing through the second-type power conversion device,
a second-type voltage acquiring unit configured to acquire a second-type voltage that is a voltage of a second-type power line that connects the second-type power conversion device and the load, and
a second-type control unit configured to control the second-type voltage, and
the second-type control unit may include a second-type droop control unit configured to perform a second-type droop control of drooping the second-type voltage according to a second-type droop characteristic that defines a relationship between the second-type physical quantity and the second-type voltage, and
may not include a correction distribution unit configured to distribute a correction of the second-type droop characteristic into a correction of a slope of the second-type droop characteristic with respect to the second-type physical quantity and a correction of an intercept that is a predetermined value of the second-type voltage in the second-type droop characteristic with respect to the second-type physical quantity.

Even in a DC power supply system in which the first-type power conversion device including the correction distribution unit that distributes the correction of the droop characteristic to the correction of the slope and the correction of the intercept for execution and the second-type power conversion device not including such a correction distribution unit are connected in parallel with the load, the overshooting of an output current or output power due to load fluctuations can be suppressed.

### ADVANTAGEOUS EFFECTS OF INVENTION

The present invention can provide a droop control technique that can suppress the overshooting of an output current or output power even during load fluctuations.

### BRIEF DESCRIPTION OF THE DRAWINGS

FIG. 1 is a diagram illustrating a schematic configuration of a DC power supply system according to a first example.
FIG. 2 is a diagram illustrating a schematic configuration of a droop characteristic correction calculation unit according to the first example.
FIG. 3 is a diagram for explaining a method of distributing correction values in a correction distribution calculation unit according to the first example.
FIG. 4 is a diagram for explaining a limit range of a correction range according to the first example.
FIG. 5A and FIG. 5B are diagrams for explaining droop characteristic correction in a DC power supply system according to the related art.
FIG. 6A and FIG. 6B are diagrams for explaining droop characteristic correction in a DC power supply system according to the first example.
FIG. 7A and FIG. 7B are diagrams for explaining effects of droop characteristic correction according to the related art and the first example.
FIG. 8 is a diagram illustrating a schematic configuration of a droop characteristic correction calculation unit according to a second example.
FIG. 9 is a diagram for explaining a method of distributing correction values in a correction distribution calculation unit according to the second example.
FIG. 10A and FIG. 10B are diagrams for explaining effects of droop characteristic correction according to the related art and the second example.
FIG. 11A and FIG. 11B are diagrams for explaining effects of droop characteristic correction according to the related art and the second example by comparison.
FIG. 12 is a diagram illustrating a schematic configuration of a droop characteristic correction calculation unit according to a third example.
FIG. 13 is a diagram for explaining a method of distributing correction values in a correction distribution calculation unit according to the third example.
FIG. 14 is a diagram illustrating a schematic configuration of a droop characteristic correction calculation unit according to a fourth example.
FIG. 15 is a diagram for explaining a method of distributing correction values in a correction distribution calculation unit according to the fourth example.

### DESCRIPTION OF EMBODIMENTS

### [Application Example]

An application example of the present invention is described below with reference to the drawings.

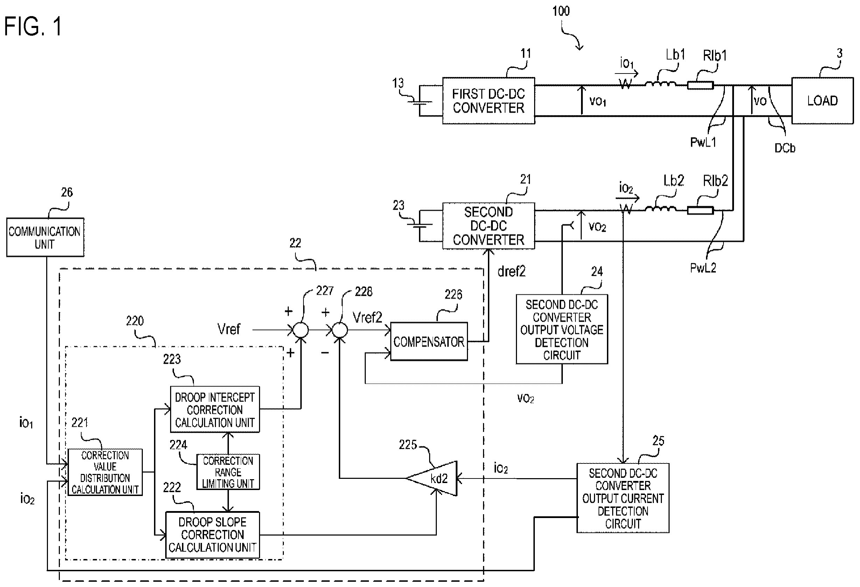

FIG. 1 is a diagram illustrating a schematic configuration of a DC power supply system 100 according to an application example of the present invention. The DC power supply system 100 includes a first DC-DC converter 11 that steps-up, steps-up and steps-down, or steps-down a DC power voltage discharged from a storage battery 13 and outputs the voltage and a second DC-DC converter 21 that steps-up, steps-up and steps-down, or steps-down a DC power voltage discharged from a storage battery 23 and outputs the voltage, and supplies DC power to a load 3 by operating in parallel the first DC-DC converter 11 and the second DC-DC converter 21 connected in parallel with the load 3.

The second DC-DC converter 21 includes a control unit 22, a second DC-DC converter output voltage detection circuit 24, a second DC-DC converter output current detection circuit 25, and a communication unit 26. The control unit 22 includes a droop characteristic correction calculation unit 220, a droop gain (kd2) multiplier 225, a compensator 226, and addition points 227 and 228, and the droop characteristic correction calculation unit 220 includes a correction value distribution calculation unit 221, a droop slope correction calculation unit 222, a droop intercept correction calculation unit 223, and a correction range limiting unit 224.

The control unit 22 of the second DC-DC converter 21 performs a droop control of drooping an output voltage vo₂ on the basis of an output current io₁ detected by the second DC-DC converter output current detection circuit 25. In the droop control according to the present application example, the correction of a droop characteristic is performed by distributing the correction to at least one of a slope and an intercept of the droop characteristic on the basis of an output current value obtained by normalizing the output current values io₁ and io₂ of the first DC-DC converter 11 and the second DC-DC converter 21 constituting the DC power supply system 100 by respective rated current values thereof.

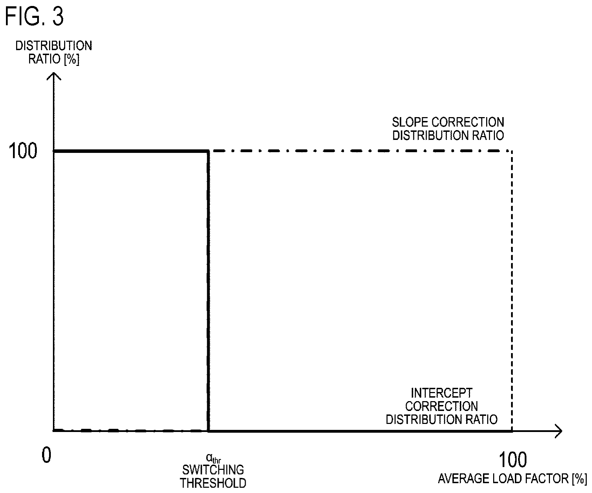

FIG. 3 illustrates an example of a method of correcting the droop characteristic by distributing the correction to at least one of the slope correction and the intercept correction of the droop characteristic. In FIG. 3, a slope correction distribution ratio is indicated by a one dot chain line and an intercept correction distribution ratio is indicated by a solid line. When an average load factor i_{avg_pu} is equal to or less than a switching threshold αₜₕᵣ, the intercept correction distribution ratio is 100% and the slope correction distribution ratio is 0%, so that only the slope of the droop characteristic is corrected and no intercept is corrected. When the average load factor i_{avg_pu} exceeds the switching threshold αₜₕᵣ, the slope correction distribution ratio is 100% and the intercept correction distribution ratio is 0%, so that only the intercept of the droop characteristic is corrected and no slope is corrected.

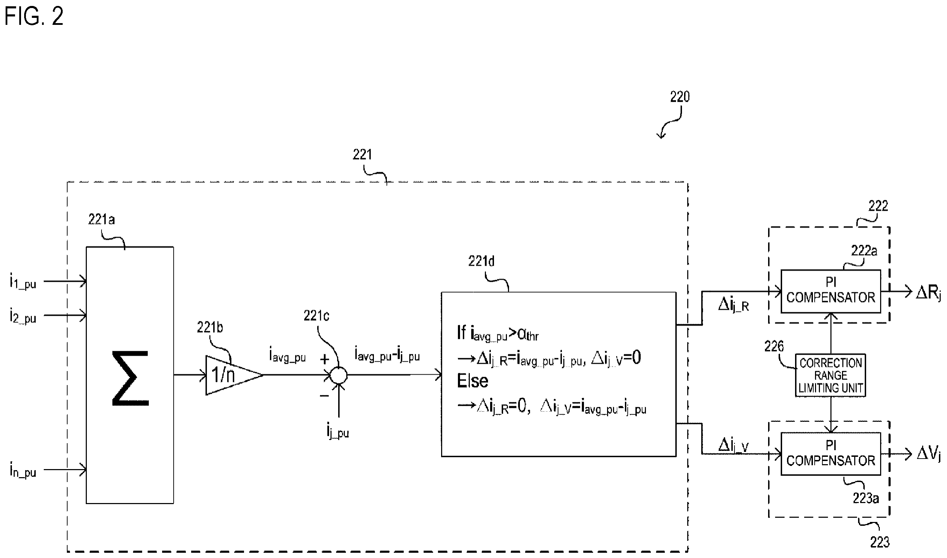

FIG. 2 illustrates a schematic configuration of the droop characteristic correction calculation unit 220. FIG. 2 illustrates an example of a general DC power supply system including n (n ≥ 2) DC-DC converters. As needed, the DC power supply system 100 illustrated in FIG. 1 and corresponding to a DC power supply system with n = 2 is described as an example. Here, i_{j_pu} represents a value ioⱼ/lⱼ obtained by dividing a normalized output current value (which can also be referred to as a load factor) of a j^{th} DC-DC converter (1 ≤ j ≤ n), that is, an output current detection value ioⱼ of a j^{th} converter, by a rated output current value lⱼ of the j^{th} DC-DC converter. An adder 221a calculates the sum of load factors i_{j_pu} (1 ≤ j ≤ n) of all the DC-DC converters constituting the DC power supply system.

The sum of the load factors is multiplied by 1/n in a gain (1/n) multiplier 221b, and the average load factor i_{avg_pu} per DC-DC converter is calculated. In an addition point 221c, the load factor i_{j_pu} of the DC-DC converter (here, the second DC-DC converter 21) is subtracted from the average load factor i_{avg_pu}, and a difference i_{avg_pu} - i_{j_pu} between the average load factor and the load factor is calculated and input to a conditional branching block 221d.

The conditional branching block 221d switches whether to correct the intercept or the slope of the droop characteristic on the basis of a comparison between the average load factor i_{avg_pu} and the switching threshold αₜₕᵣ. When the average load factor i_{avg_pu} is greater than the switching threshold αₜₕᵣ, that is, i_{avg_pu} > αₜₕᵣ, a slope correction difference Δi_{j_R} is set to the difference i_{avg_pu} - i_{j_pu} between the average load factor and the load factor and an intercept correction difference Δi_{j_V} is set to 0, and in other cases (i_{avg_pu} ≤ αₜₕᵣ), the slope correction difference Δi_{j_R} is set to 0 and the intercept correction difference Δi_{j_V} is set to the difference i_{avg_pu} - i_{j_pu} between the average load factor and the load factor.

The slope correction difference Δi_{j_R} calculated by the conditional branching block 221d is input to the droop slope correction calculation unit 222, and the intercept correction difference Δi_{j_V} calculated by the conditional branching block 221d is input to the droop intercept correction calculation unit 223. In the droop slope correction calculation unit 222, a PI compensator 222a performs PI control on the input slope correction difference Δi_{j_R} to calculate slope correction values ΔRⱼ of the droop characteristics, and the calculated slope correction values ΔRⱼ are input to the droop gain (kd2) multiplier 225. In the droop intercept correction calculation unit 223, a PI compensator 223a performs PI control on the input intercept correction differences Δi_{j_V} to calculate intercept correction values ΔVⱼ of the droop characteristics, and the calculated intercept correction values ΔVⱼ are input to the addition point 227.

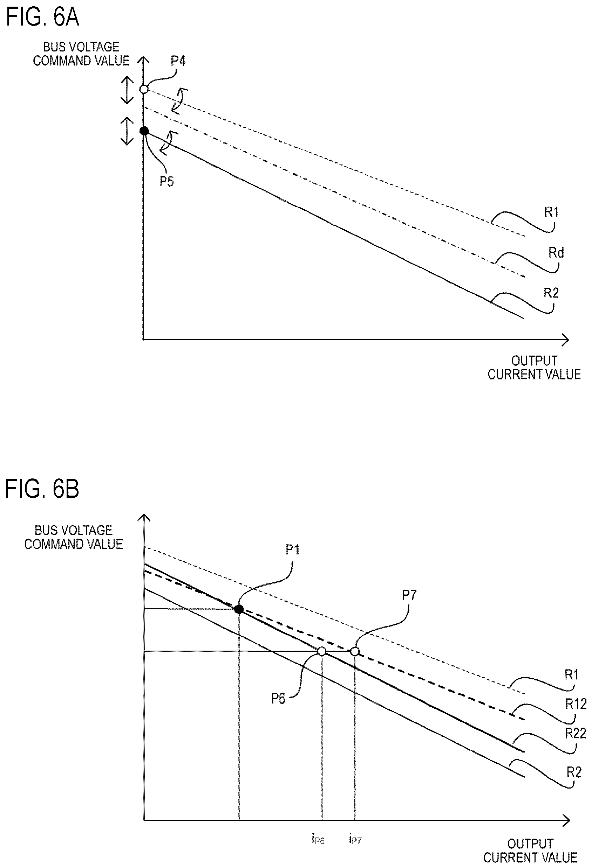

In the DC power supply system 100 that performs such correction of the load characteristics, for example, a droop characteristic R1 of the first DC-DC converter 11 that detects a low voltage due to detection variation or the like and a droop characteristic R2 of the second DC-DC converter 21 that detects a high voltage are distributed to an intercept and a slope, and the correction of the droop characteristic is performed. The droop characteristic corrected in this manner is illustrated in FIG. 6B. A corrected droop characteristic R12 of the droop characteristic R1 is indicated by a thick broken line R12, and a corrected droop characteristic R22 of the droop characteristic R2 is indicated by a thick solid line R22. For example, it is assumed that the first DC-DC converter 11 is droop-controlled according to the droop characteristics R1 and R12 and the second DC-DC converter 21 is droop-controlled according to the droop characteristics R2 and R22. In the DC power supply system 100 controlled according to the droop characteristics R12 and R22 corrected at a light load and indicated by a black circle P1, even when load fluctuations occur, the output current of the first DC-DC converter 11 is i_{P7} corresponding to a white circle P7, and the output current of the second DC-DC converter 21 is i_{P6} corresponding to a white circle P6, so that a current unbalance amount can be suppressed.

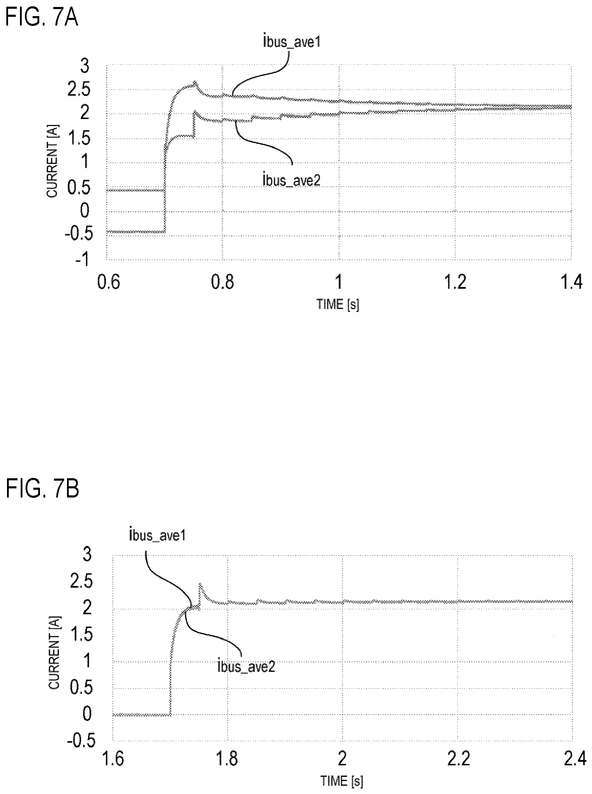

FIG. 7B illustrates an average output current value i_{bus_ave1} of the first DC-DC converter 11 and an average output current value i_{bus_ave2} of the second DC-DC converter 21 in the above-described DC power supply system 100. In FIG. 7B, a horizontal axis represents time [s] and a vertical axis represents current [A]. As illustrated in FIG. 7B, the current unbalance is suppressed even when the average output current is close to 0, and the overshooting of the average output current value i_{bus_ave1} of the first DC-DC converter 11 due to load fluctuations is also suppressed. In addition, the average output current value i_{bus_ave1} of the first DC-DC converter 11 and the average output current value i_{bus_ave2} of the second DC-DC converter 21 are shown to substantially overlap each other, so that the current unbalance due to the correction of the load characteristics is suppressed.

### [First Example]

The DC power supply system 100 according to the first example of the present invention is described below in more detail with reference to the drawings. However, the configuration of the device and the system described in the example need to be changed as appropriate in accordance with various conditions. That is, the scope of the invention is not intended to be limited to the following example.

FIG. 1 is a diagram illustrating schematic configurations of the control unit 22 and the first DC-DC converter 11 and the second DC-DC converter 21 constituting the DC power supply system 100 according to the first example of the present invention. Since a control unit of the first DC-DC converter 11 also has components similar to those of the control unit 22 of the second DC-DC converter 21, descriptions thereof are omitted. In the illustration of FIG. 1, the second DC-DC converter 21 and the control unit 22 are separated for the sake of description, but as a specific device, the control unit 22 is housed in a housing of the second DC-DC converter 21 (the same applies to a DC-DC converter to be described below). The DC power supply system 100 corresponds to a DC power supply system of the present invention, and the first DC-DC converter 11 and the second DC-DC converter 21 correspond to a power conversion device and a first-type power conversion device of the present invention. In addition, when the second DC-DC converter 21 corresponds to the power conversion device of the present invention, the first DC-DC converter 11 corresponds to another power conversion device of the present invention, and when the first DC-DC converter 11 corresponds to the power conversion device of the present invention, the second DC-DC converter 21 corresponds to another power conversion device of the present invention.

The DC power supply system 100 includes the first DC-DC converter 11 that steps-up, steps-up and steps-down, or steps-down a DC power voltage discharged from the storage battery 13 and outputs the voltage, and the second DC-DC converter 21 that steps-up, steps-up and steps-down, or steps-down a DC power voltage discharged from the storage battery 23 and outputs the voltage. In the DC power supply system 100, the two converters, that is, the first DC-DC converter 11 and the second DC-DC converter 21 are connected in parallel with the load 3 through a DC bus DCb and are operated in parallel to supply DC power to the load 3. Although FIG. 1 illustrates the DC power supply system 100 including the first DC-DC converter 11 and the second DC-DC converter 21 respectively connected to the two storage batteries 13 and 23, the DC power supply system 100 may include three or more storage batteries and DC-DC converters connected in parallel. In addition, various distributed power sources can also be employed as a DC power source, and the storage battery is not limitative. The storage batteries 13 and 23 correspond to a DC power source of the present invention. The first DC-DC converter 11 and the second DC-DC converter 21 correspond to a plurality of power conversion devices of the present invention.

The first DC-DC converter 11 is connected to the load 3 through the DC buses DCb and output lines PwL1 of the first DC-DC converter 11, and the second DC-DC converter 21 is connected to the load 3 through the DC buses DCb and output lines PwL2 of the second DC-DC converter 21. Here, an inductance Lb1 and a resistance RIb1 represent the inductance component and resistance component of the wiring impedance of the output line PwL1. In addition, an inductance Lb2 and a resistance RIb2 represent the inductance component and resistance component of the wiring impedance of the output line PwL2.
The second DC-DC converter 21 includes the control unit 22, the second DC-DC converter output voltage detection circuit 24, the second DC-DC converter output current detection circuit 25, and the communication unit 26. The control unit 22 includes the droop characteristic correction calculation unit 220, the correction value distribution calculation unit 221, the droop slope correction calculation unit 222, the droop intercept correction calculation unit 223, the correction range limiting unit 224, the droop gain (kd2) multiplier 225, the compensator 226, and the addition points 227 and 228. The control unit 22 may include a computer including a central processing unit (CPU) and a memory, a digital signal processor (DSP), an application-specific integrated circuit (ASIC), and the like. Some or all of the functions of each unit may be implemented by executing software on hardware or may be implemented by dedicated hardware. The correction value distribution calculation unit 221 corresponds to a correction distribution unit of the present invention.

The second DC-DC converter output voltage detection circuit 24 detects an output voltage vo₂ that is a voltage between the output lines PwL2 of the second DC-DC converter 21. The second DC-DC converter output current detection circuit 25 detects a current (second DC-DC converter output current) io₂ flowing through the output line PwL2 of the second DC-DC converter 21. The communication unit 26 is an interface that performs communication with an external device including the first DC-DC converter 11 by using an appropriate communication method. The output line PwL2 corresponds to a power line of the present invention, the output voltage vo₂ as the voltage between the output lines PwL2 corresponds to the voltage of the power line of the present invention, and the second DC-DC converter output voltage detection circuit 24 corresponds to a voltage acquiring unit of the present invention. In addition, the output current io₂ flowing through the output line PwL2 corresponds to a current flowing through the power conversion device of the present invention as well as a physical quantity and a first-type physical quantity, and the second DC-DC converter output current detection circuit 25 corresponds to a physical quantity acquiring unit of the present invention.

The output voltage value vo₂ of the second DC-DC converter 21 detected by the second DC-DC converter output voltage detection circuit 24 is input to the compensator 226.

The output current value io₂ of the second DC-DC converter 21 detected by the second DC-DC converter output current detection circuit 25 is input to the droop gain (kd2) multiplier 225 and the correction value distribution calculation unit 221.

As described above, the output current value io₂ of the second DC-DC converter 21 is input to the correction value distribution calculation unit 221 from the second DC-DC converter output current detection circuit 25, and the output current value io₁ of the first DC-DC converter 11 acquired from the first DC-DC converter 11 is input to the correction value distribution calculation unit 221 through the communication unit 26. When the DC power supply system 100 includes another DC-DC converter connected in parallel with the load 3 through the DC bus DCb in addition to the first DC-DC converter 11 and the second DC-DC converter 21, an output current of the other DC-DC converter is also input to the correction value distribution calculation unit 221 from each DC-DC converter through the communication unit 26.

The droop characteristic correction calculation unit 220 including the correction value distribution calculation unit 221, the droop slope correction calculation unit 222, the droop intercept correction calculation unit 223, and the correction range limiting unit 224 is described in detail below. A slope correction value ΔR₂ output from the droop slope correction calculation unit 222 is input to the droop gain (kd2) multiplier 225, and a value (kd2 + ΔR₂) io₂ obtained by multiplying the output current value io₂ by the corrected droop gain (kd2 + ΔR₂) is input from the droop gain (kd2) multiplier 225 to the addition point 228.

An intercept correction value ΔV₂ output from the droop intercept correction calculation unit 223 is input to the addition point 227. In the addition point 227, the intercept correction value ΔV₂ is added to a voltage command value Vref of the DC bus DCb and the addition result is output to the addition point 228.

From the addition point 228, a second DC-DC converter voltage command value Vref2 = (Vref + ΔV₂) - (kd2 + ΔR₂) io₂ obtained by subtracting (kd2 + ΔR₂) io₂ input from the droop gain (kd2) multiplier 225 from (Vref + ΔV₂) input from the addition point 227 is input to the compensator 226. The droop gain (kd2) multiplier 225 and the addition point 228 correspond to a droop control unit of the present invention.

The compensator 226 generates a duty command value dref2 of the second DC-DC converter 21 on the basis of a deviation between the voltage command value Vref2 of the second DC-DC converter 21 and the output voltage value vo₂ of the second DC-DC converter 21. The second DC-DC converter 21 is controlled according to the input duty command value dref2.

FIG. 2 illustrates a schematic configuration of the droop characteristic correction calculation unit 220 according to the first example. FIG. 2 illustrates an example of a general DC power supply system including n (n ≥ 2) DC-DC converters. Hereinafter, the DC power supply system 100 illustrated in FIG. 1 corresponding to a DC power supply system with n = 2 is described as an example as needed, but the same applies to a DC power supply system including an appropriate number of DC-DC converters in which n is 2 or more (the same applies to each example below). Here, i_{j_pu} represents the value ioⱼ/lⱼ obtained by dividing the normalized output current value (which can also be referred to as a load factor) of the j^{th} DC-DC converter (1 ≤ j ≤ n), that is, the output current detection value ioⱼ of the j^{th} converter, by the rated output current value lⱼ of the j^{th} DC-DC converter. When DC-DC converters (in the example of FIG. 1, the first DC-DC converter 11 and the second DC-DC converter 21) are included in the DC power supply system 100 and stores information on their own rated current values of the DC-DC converters operated in parallel, the load factor of each DC-DC converter can be calculated through the communication unit 26 or from the output current values input from the second DC-DC converter output current detection circuit 25. The load factor may be transmitted from each DC-DC converter included in the DC power supply system 100 to the other DC-DC converters instead of the output current value. The adder 221a calculates the sum of the load factors i_{j_pu} (1 ≤ j ≤ n) of all the DC-DC converters included in the DC power supply system and operated in parallel. When the load factor is calculated, the output current detection value ioⱼ of the j^{th} converter is used, but an output current estimation value of the j^{th} converter may be used instead. Although not illustrated, the output current value io₂ output from the second DC-DC converter output current detection circuit 25 is transmitted from the communication unit 26 of the second DC-DC converter 21 to the other DC-DC converters including the first DC-DC converter 11. The communication unit 26 and an arithmetic processing unit that performs an arithmetic operation of dividing the output current value of the other DC-DC converter acquired through the communication unit 26 by the rated output current value of each DC-DC converter correspond to another-device load factor acquiring unit of the present invention. In a configuration in which the load factor is directly transmitted from another DC-DC converter, the communication unit 26 corresponds to another-device load factor acquiring unit of the present invention.

The sum of the load factors is multiplied by 1/n in the gain (1/n) multiplier 221b, and the average load factor i_{avg_pu} per DC-DC converter included in the DC power supply system 100 is calculated. In the addition point 221c, the load factor i_{j_pu} of the DC-DC converter (here, the second DC-DC converter 21) is subtracted from the average load factor i_{avg_pu}, and the difference i_{avg_pu} - i_{j_pu} between the average load factor and the load factor is calculated and input to the conditional branching block 221d. The average load factor i_{avg_pu} per DC-DC converter included in the DC power supply system 100 corresponds to a system average load factor of the present invention.

The conditional branching block 221d switches whether to correct the intercept or the slope of the droop characteristic on the basis of a comparison between the average load factor i_{avg_pu} and the switching threshold αₜₕᵣ (switching method). When the average load factor i_{avg_pu} is greater than the switching threshold αₜₕᵣ, that is, i_{avg_pu} > αₜₕᵣ, the slope correction difference Δi_{j_R} is set to the difference i_{avg_pu} - i_{j_pu} between the average load factor and the load factor and the intercept correction difference Δi_{j_V} is set to 0, and in other cases (i_{avg_pu} ≤ αₜₕᵣ), the slope correction difference Δi_{j_R} is set to 0 and the intercept correction difference Δi_{j_V} is set to the difference i_{avg_pu} - i_{j_pu} between the average load factor and the load factor. That is, the difference i_{avg_pu} - i_{j_pu} between the average load factor and the load factor is switched to either the slope correction or the intercept correction of the droop characteristic and distributed on the basis of the comparison between the average load factor i_{avg_pu} and the switching threshold αₜₕᵣ. The switching threshold αₜₕᵣ corresponds to a predetermined switching threshold of the present invention.

FIG. 3 is a graph for explaining a method in which the above-described correction value distribution calculation unit 221 corrects the droop characteristic by distributing the correction of the droop characteristic to the correction of the slope and the correction of the intercept. In the graph in FIG. 3, a horizontal axis represents the average load factor i_{avg_pu} expressed in %, and a vertical axis represents a distribution ratio expressed in % as to whether the correction of the droop characteristic is distributed to the slope correction or the intercept correction. In FIG. 3, the slope correction distribution ratio is indicated by a one dot chain line, and the intercept correction distribution ratio is indicated by a solid line. When the average load factor i_{avg_pu} is equal to or less than the switching threshold αₜₕᵣ, the intercept correction distribution ratio is 100% and the slope correction distribution ratio is 0%, so that only the intercept of the droop characteristic is corrected and no slope is corrected. When the average load factor i_{avg_pu} is greater than the switching threshold αₜₕᵣ, the slope correction distribution ratio is 100% and the intercept correction distribution ratio is 0%, so that only the slope of the droop characteristic is corrected and no intercept is corrected.

In this way, the slope correction difference Δi_{j_R} calculated by the conditional branching block 221d is input to the droop slope correction calculation unit 222, and the intercept correction differences Δi_{j_V} calculated by the conditional branching block 221d are input to the droop intercept correction calculation unit 223. In the droop slope correction calculation unit 222, the PI compensator 222a performs PI control on the input slope correction difference Δi_{j_R} to calculate the slope correction values ΔRⱼ of the droop characteristics, and the calculated slope correction values ΔRⱼ are input to the droop gain (kd2) multiplier 225. In the droop intercept correction calculation unit 223, the PI compensator 223a performs PI control on the input intercept correction differences Δi_{j_V} to calculate the intercept correction values ΔVⱼ of the droop characteristics, and the calculated intercept correction values ΔVⱼ are input to the addition point 227.

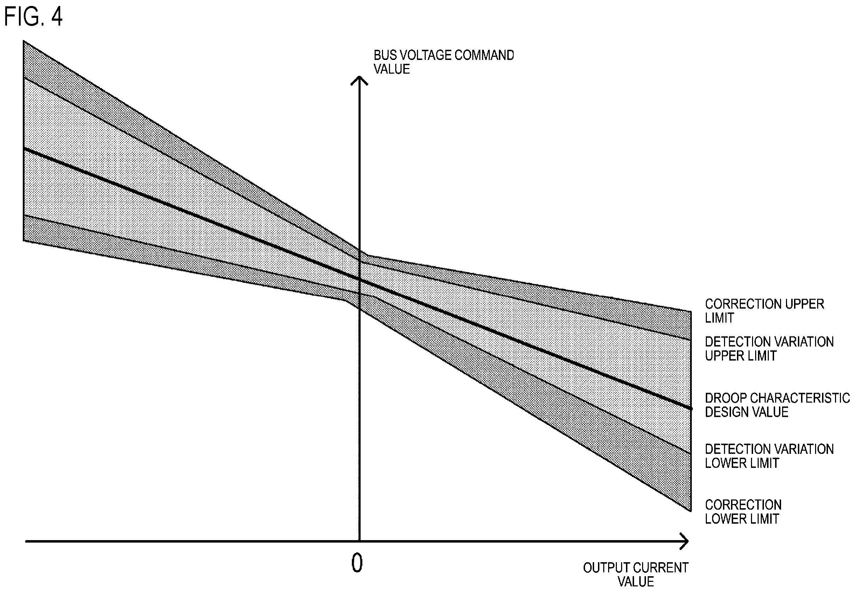

The droop characteristic correction calculation unit 220 includes the correction range limiting unit 224. The correction range limiting unit 224 has a function of limiting the range of the correction of the droop characteristic in the droop slope correction calculation unit 222 and the droop intercept correction calculation unit 223. FIG. 4 is a graph showing the limitation of the correction range of the droop characteristic by the correction range limiting unit 224. In the graph of FIG. 4, a horizontal axis represents an output current value, and a vertical axis represents a bus voltage command value. A range from a lower limit to an upper limit of a detection variation of a bus voltage, including a design value of the droop characteristic indicated by a solid line, is indicated by a light gray region, and a range from a lower limit to an upper limit of the correction range by the droop characteristic correction calculation unit 220 is indicated by a dark gray region. As illustrated in FIG. 4, the correction of the slope and the intercept of the droop characteristic by the droop characteristic correction calculation unit 220 is performed not to exceed upper and lower limits with a slight margin in a range (detection error range) of the detection variation of the bus voltage. The correction range limiting unit 224 can limit the correction range of the droop characteristic by limiting the integration range of an integration process in the PI compensator 222a and the PI compensator 223a, for example, but the method of limiting the correction range is not limited thereto. In this way, by limiting the range of the correction of the droop characteristic, excessive correction can be suppressed. The correction range limiting unit 224 corresponds to a correction range limiting unit of the present invention.
Such a correction range limiting unit 224 can also be omitted. In addition, the DC power supply system 100 can also be configured to include a DC-DC converter including no correction range limiting unit 224 and a DC-DC converter including the correction range limiting unit 224.

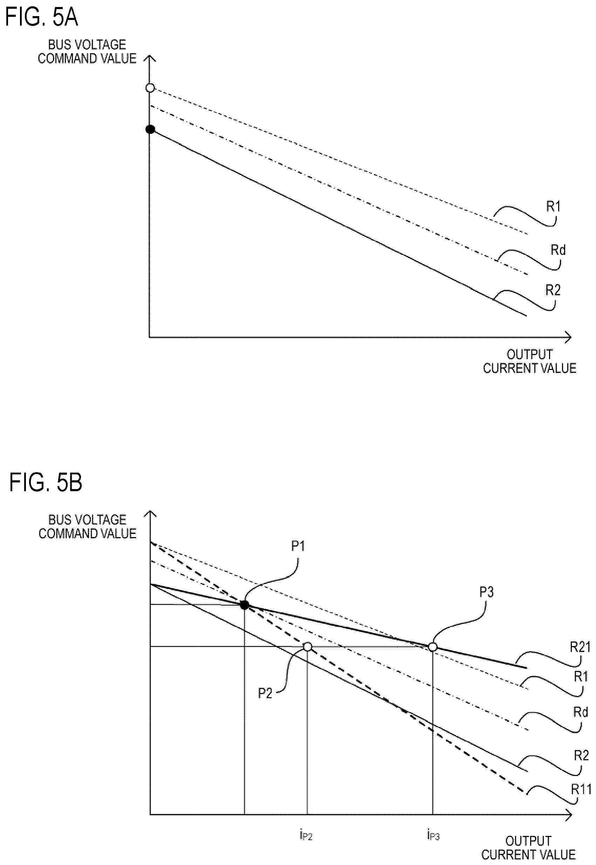

The above-described DC power supply system 100 can suppress unbalance and overshooting of an output current due to load fluctuations. The principle of the DC power supply system 100 that achieves such an effect is described below with reference to FIGS. 5 and 6.
FIG. 5 is a graph for explaining the related art disclosed in Non-Patent Document 1. In FIG. 5A, a design value Rd of the droop characteristic is indicated by a one dot chain line, and the droop characteristics R1 and R2 shifted due to the detection variation or the like of the bus voltage are indicated by a broken line and a solid line, respectively. The droop characteristic R1 is, for example, a case in which the second DC-DC converter output voltage detection circuit 24 detects a low voltage, and corresponds to, for example, a case in which the second DC-DC converter output voltage detection circuit 24 detects a high voltage. In the DC power supply system in which each DC-DC converter is controlled on the basis of the droop characteristic as illustrated in FIG. 5A, when the slope of the droop characteristic is corrected as in the related art at a light load indicated by the black circle P1, the corrected droop characteristic of the droop characteristic R1 is indicated by a thick broken line R11 and the corrected droop characteristic of the droop characteristic R2 is indicated by a thick solid line R21. At this time, when load fluctuations occur, the output current of the DC-DC converter that is droop-controlled according to the droop characteristic R21 is i_{PS} corresponding to a white circle P3, and the output current of the DC-DC converter that is droop-controlled according to the droop characteristic R11 is i_{P2} corresponding to a white circle P2, resulting in a current unbalance.

FIG. 6 is a diagram for explaining a case in which the above-described DC power supply system 100 performs the droop characteristic correction. As illustrated in FIG. 6A, in the DC power supply system 100, an intercept P4 of the droop characteristic R1 indicated by a white circle and the slope of the droop characteristic R1 are changed by the correction as indicated by respective arrows. Similarly, an intercept P5 of the droop characteristic R2 indicated by a black circle and the slope of the droop characteristic R2 are changed by the correction as indicated by the respective arrows. The droop characteristic corrected in this manner is illustrated in FIG. 6B. The corrected droop characteristic R12 of the droop characteristic R1 is indicated by the thick broken line R12, and the corrected droop characteristic R22 of the droop characteristic R2 is indicated by the thick solid line R22. For example, it is assumed that the first DC-DC converter 11 is droop-controlled according to the droop characteristics R1 and R12 and the second DC-DC converter 21 is droop-controlled according to the droop characteristics R2 and R22. As in the related art, in the DC power supply system 100 controlled according to the droop characteristics R12 and R22 corrected at the light load indicated by the black circle P1, even when load fluctuations occur, the output current of the first DC-DC converter 11 is i_{P7} corresponding to the white circle P7, and the output current of the second DC-DC converter 21 is i_{P6} corresponding to the white circle P6, so that a current unbalance amount can be suppressed. For example, a value, at which a straight line representing the droop characteristic intersects a vertical axis (output current = 0) as indicated by the white circle P4 illustrated in FIG. 6A, is the intercept of the droop characteristic, and corresponds to a value of a voltage (bus voltage command value) of the present invention with respect to a predetermined physical quantity (output current = 0) in the droop characteristic.

FIG. 7 is a graph for explaining an overshoot suppression effect by the droop characteristic correction in the above-described DC power supply system 100. FIG. 7A illustrates time [s] on a horizontal axis and current [A] on a vertical axis, and illustrates the average output current value i_{bus_ave1} of the first DC-DC converter 11 and the average output current value i_{bus_ave2} of the second DC-DC converter 21 when the droop characteristic correction is performed by using the related art. As illustrated in FIG. 7A, according to the related art, when the average output current is close to 0, it can be seen that a current unbalance is large and overshooting occurs in the average output current i_{bus_ave1} **of the** first DC-DC converter due to load fluctuations. In this way, when the overshooting occurs, the rating of the first DC-DC converter 11 may have no margin. Also in the related art, the current unbalance between the first DC-DC converter 11 and the second DC-DC converter 21 is gradually eliminated by repeating the slope correction of the droop characteristic.

FIG. 7B illustrates the average output current value i_{bus_ave1} of the first DC-DC converter 11 and the average output current value i_{bus_ave2} of the second DC-DC converter 21 in the above-described DC power supply system 100. Similarly, in FIG. 7B, the horizontal axis represents time [s] and the vertical axis represents current [A]. As illustrated in FIG. 7B, even when the average output current is close to 0, it can be seen that the current unbalance is suppressed and the overshooting of the average output current value i_{bus_ave1} of the first DC-DC converter 11 due to the load fluctuations is also suppressed. In addition, the average output current value i_{bus_ave1} of the first DC-DC converter 11 and the average output current value i_{bus_ave2} of the second DC-DC converter 21 are shown to substantially overlap each other, which also shows that the current unbalance due to the correction of the load characteristics is suppressed.

### [Second Example]

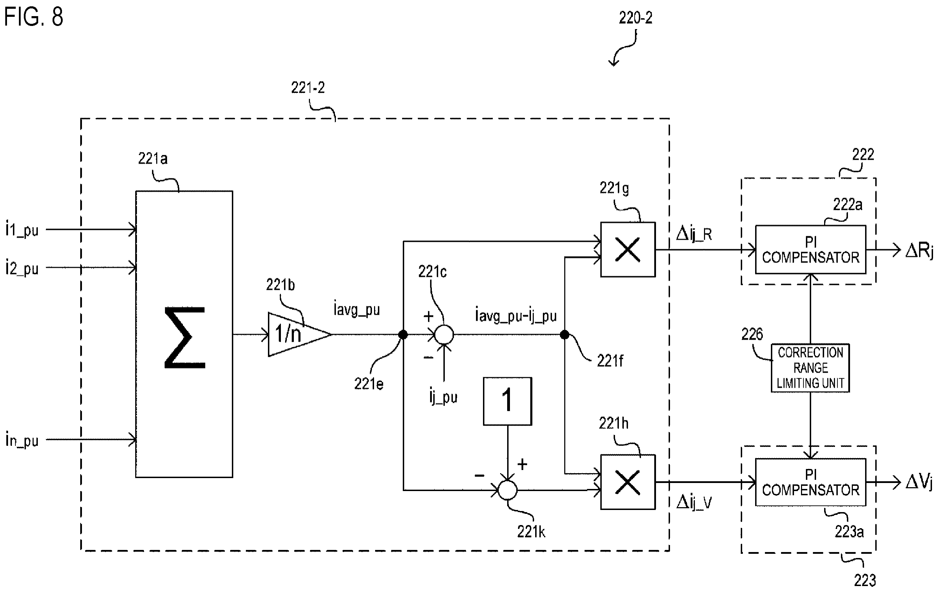

A DC power supply system 100 according to the second example is described below. Since the DC power supply system 100 according to the second example has the same configuration as the DC power supply system 100 according to the first example except for the configuration of a droop characteristic correction calculation unit 220-2, the same components are denoted with the same reference numerals and descriptions thereof are omitted. FIG. 8 illustrates a schematic configuration of the droop characteristic correction calculation unit 220-2 according to the second example. The same reference numerals are used for the same components as those of the droop characteristic correction calculation unit 220 according to the first example, and descriptions thereof are omitted. A correction value distribution calculation unit 221-2 includes an adder 221a, a gain (1/n) multiplier 221b, and an addition point 221c that are components common to the correction value distribution calculation unit 221. The correction value distribution calculation unit 221-2 further includes a lead-out point 221e, a lead-out point 221f, a multiplier 221g, a multiplier 221h, and an addition point 221k. The correction value distribution calculation unit 221-2 corresponds to a correction distribution unit of the present invention.

In the correction value distribution calculation unit 221-2, the average load factor i_{avg_pu} per DC-DC converter output from the gain (1/n) multiplier 221b is input to the addition point 221c, and is also input to the multiplier 221g and the addition point 221k via the lead-out point 221e. The difference i_{avg_pu} - i_{j_pu} between the average load factor and the load factor output from the addition point 221c is input to the multipliers 221g and 221h via the lead-out point 221f. In the addition point 221k, the average load factor i_{avg_pu} per DC-DC converter is subtracted from 1, and the obtained 1 - i_{avg_pu} is input to the multiplier 221h. In the multiplier 221g, i_{avg_pu} corresponding to the slope correction distribution ratio is multiplied by the difference i_{avg_pu} - i_{j_pu} between the average load factor and the load factor, and the calculated slope correction difference Δi_{j_R} = i_{avg_pu} (i_{avg_pu} - i_{j_pu}) is input to the PI compensator 222a of the droop slope correction calculation unit 222. In addition, in the multiplier 221h, 1 - i_{avg_pu} corresponding to the intercept correction distribution ratio is multiplied by the difference i_{avg_pu} - i_{j_pu} between the average load factor and the load factor, and the calculated intercept correction difference Δi_{j_V} = (1 - i_{avg_pu}) (i_{avg_pu} - i_{j_pu}) is input to the PI compensator 223a of the droop intercept correction calculation unit 223. The difference i_{avg_pu} - i_{j_pu} between the average load factor and the load factor is distributed to the slope correction and the intercept correction of the droop characteristic according to a distribution ratio that varies depending on the average load factor i_{avg_pu} (fluctuation method). Since the functions of a droop slope correction calculation unit 222, a droop intercept correction calculation unit 223, and a correction range limiting unit 224 are the same as those of the droop characteristic correction calculation unit 220 according to the first example, descriptions thereof are omitted.

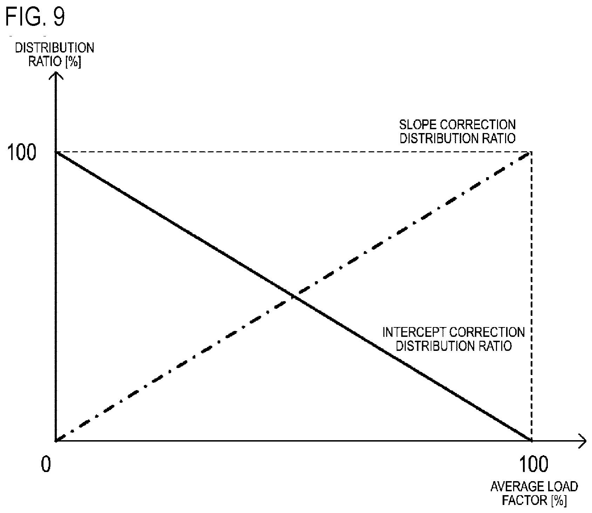

FIG. 9 is a graph for explaining a method in which the above-described correction value distribution calculation unit 221-2 corrects the droop characteristic by distributing the correction of the droop characteristic to the correction of the slope and the correction of the intercept. In the graph in FIG. 9, a horizontal axis represents the average load factor i_{avg_pu} expressed in %, and a vertical axis represents a distribution ratio expressed in % as to whether the correction of the droop characteristic is distributed to the slope correction or the intercept correction. In FIG. 93, the slope correction distribution ratio is indicated by a one dot chain line, and the intercept correction distribution ratio is indicated by a solid line. As the average load factor i_{avg_pu} changes from 0% to 100%, the intercept correction distribution ratio monotonously decreases from 100% to 0%, while the slope correction distribution ratio monotonously increases from 0% to 100%. In this way, in the droop characteristic correction in the second example, the intercept correction distribution ratio and the slope correction distribution ratio vary depending on the average load factor i_{avg_pu}.

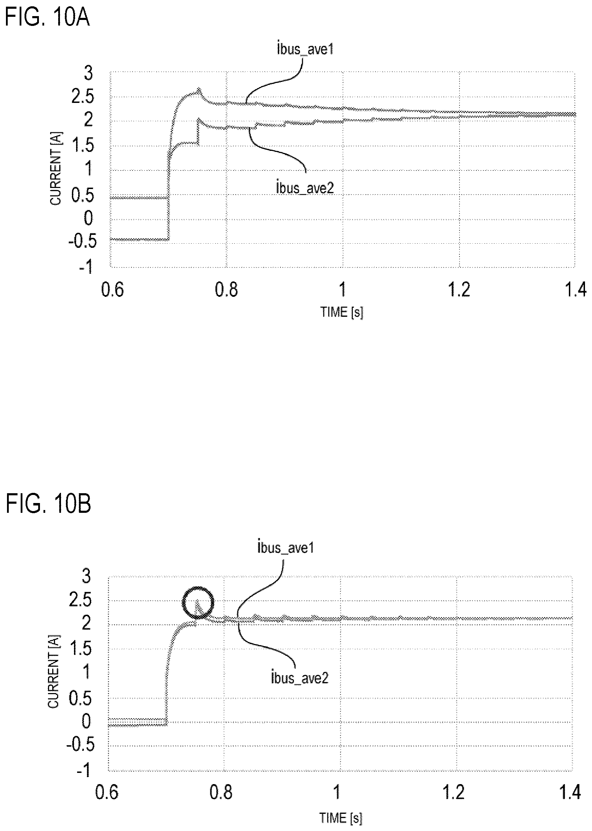

FIG. 10 is a graph for explaining an overshoot suppression effect by the droop characteristic correction in the DC power supply system 100 according to the present example. FIG. 10A illustrates time [s] on a horizontal axis and current [A] on a vertical axis, and illustrates the average output current value i_{bus_ave1} of the first DC-DC converter and the average output current value i_{bus_ave2} of the second DC-DC converter when the droop characteristic correction is performed by using the related art. Since FIG. 9A is the same as that described for FIG. 7A, descriptions thereof are omitted. FIG. 10B illustrates the average output current value i_{bus_ave1} of the first DC-DC converter 11 and the average output current value i_{bus_ave2} of the second DC-DC converter 21 in the DC power supply system 100 according to the second example. Similarly, in FIG. 10B, a horizontal axis represents time [s] and a vertical axis represents current [A]. As illustrated in FIG. 10B, even when the average output current is close to 0, the current unbalance is suppressed and the overshooting of the average output current value i_{bus_ave1} of the first DC-DC converter 11 due to load fluctuations is also suppressed, and at a peak surrounded by a circle, transient overshooting is improved by 18% compared to the related art. In addition, the average output current value i_{bus_ave1} of the first DC-DC converter 11 and the average output current value i_{bus_ave2} of the second DC-DC converter 21 are shown to substantially overlap each other, which also shows that the current unbalance due to the correction of the load characteristics is suppressed.

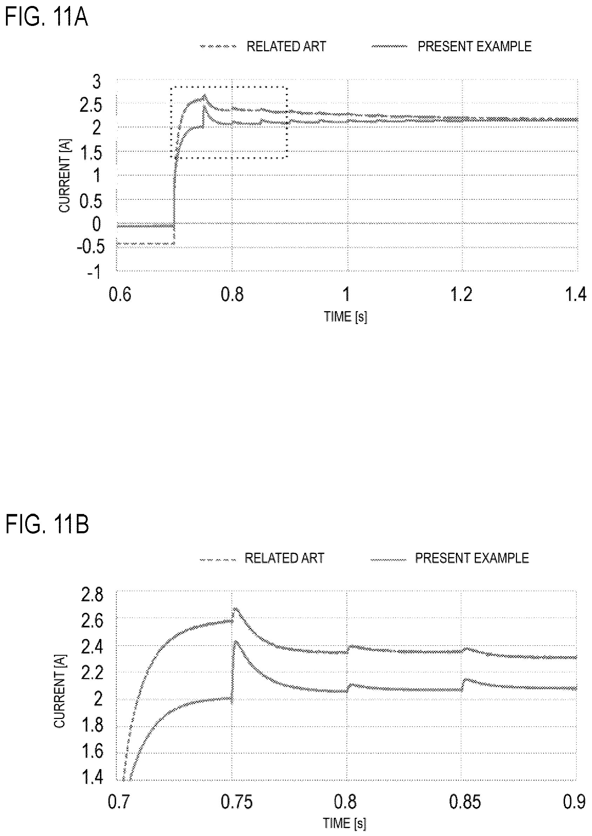

FIG. 11 is a graph showing average output currents by the droop characteristic correction according to the related art and the droop characteristic correction according to the second example side by side. FIG. 11B is an enlarged view of the vicinity of a peak surrounded by a dotted line in FIG. 11A. FIG. 11B illustrates that the overshooting is effectively suppressed in the DC power supply system 100 that performs the droop characteristic correction according to the present second example, compared to the related art.

### [Third Example]

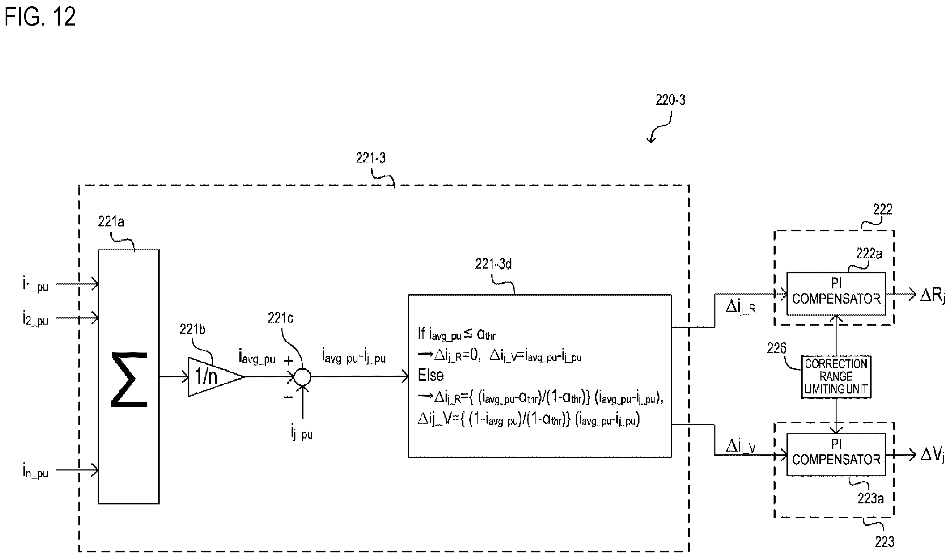

A DC power supply system 100 according to the third example is described below. Since the DC power supply system 100 according to the third example has the same configuration as the DC power supply system 100 according to the first example except for the configuration of a droop characteristic correction calculation unit 220-3, the same components are denoted with the same reference numerals and descriptions thereof are omitted. FIG. 12 illustrates a schematic configuration of the droop characteristic correction calculation unit 220-3 according to the third example. The same reference numerals are used for the same components as those of the droop characteristic correction calculation unit 220 according to the first example, and descriptions thereof are omitted. A correction value distribution calculation unit 221-3 includes an adder 221a, a gain (1/n) multiplier 221b, and an addition point 221c that are components common to the correction value distribution calculation unit 221. The correction value distribution calculation unit 221-3 includes a conditional branching block 221-3d instead of the conditional branching block 221d. The correction value distribution calculation unit 221-3 corresponds to a correction distribution unit of the present invention.

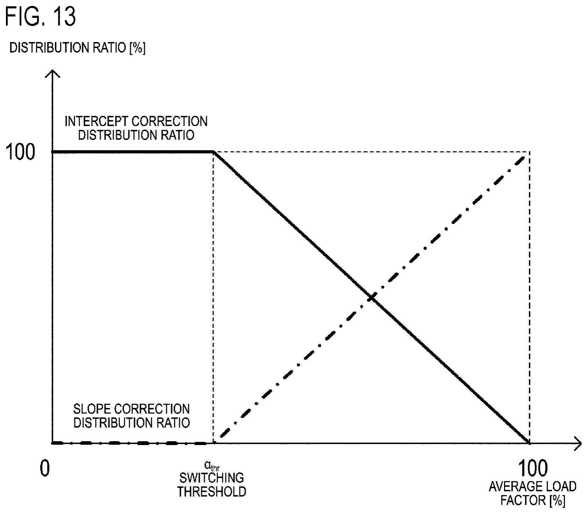

The conditional branching block 221-3d changes the method of distributing the correction values to either the intercept or the slope of the droop characteristic on the basis of the comparison between the average load factor i_{avg_pu} and the switching threshold αₜₕᵣ (switching/fluctuation mixing method). As illustrated in FIG. 13, when the average load factor i_{avg_pu} is equal to or less than the switching threshold αₜₕᵣ, the correction value is distributed by the switching method as in the first example, and when the average load factor i_{avg_pu} is greater than the switching threshold αₜₕᵣ, the correction value is distributed by the fluctuation method as in the second example. That is, when i_{avg_pu} ≤ α ₜₕᵣ, the slope correction difference Δi_{j_R} is set to the difference i_{avg_pu} - i_{j_pu} between the average load factor and the load factor and the intercept correction difference Δi_{j_V} is set to 0, and in other cases (i_{avg_pu} > αₜₕᵣ), the slope correction difference Δi_{j_R} is set to {(i_{avg_pu} - αₜₕᵣ)/(1 - αₜₕᵣ)} (i_{avg_pu} - i_{j_pu}) and Δi_{j_V} is set to {(1 - i_{avg_pu})/(1 - αₜₕᵣ)}(i_{avg_pu} - i_{j_pu}).

The DC power supply system 100 according to the third example can suppress a current unbalance amount during load fluctuations and suppress overshooting.

### [Fourth Example]

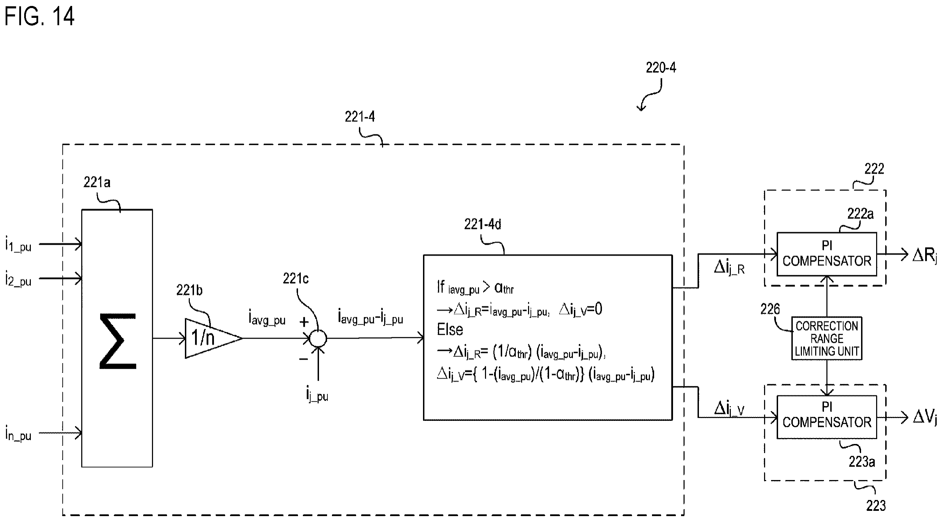

A DC power supply system 100 according to the fourth example is described below. Since the DC power supply system 100 according to the fourth example has the same configuration as the DC power supply system 100 according to the first example except for the configuration of a droop characteristic correction calculation unit 220-4, the same components are denoted with the same reference numerals and descriptions thereof are omitted. FIG. 14 illustrates a schematic configuration of the droop characteristic correction calculation unit 220-4 according to the fourth example. The same reference numerals are used for the same components as those of the droop characteristic correction calculation unit 220 according to the first example, and descriptions thereof are omitted. A correction value distribution calculation unit 221-4 includes an adder 221a, a gain (1/n) multiplier 221b, and an addition point 221c that are components common to the correction value distribution calculation unit 221. The correction value distribution calculation unit 221-4 includes a conditional branching block 221-4d instead of the conditional branching block 221d. The correction value distribution calculation unit 221-4 corresponds to a correction distribution unit of the present invention.

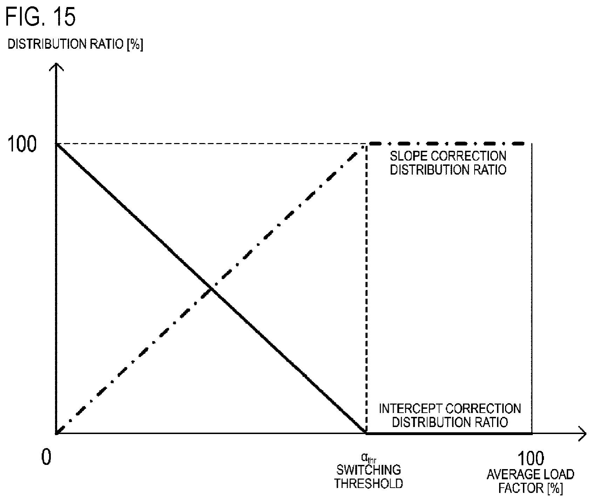

The conditional branching block 221-4d changes the method of distributing the correction values to either the intercept or the slope of the droop characteristic on the basis of the comparison between the average load factor i_{avg_pu} and the switching threshold αₜₕᵣ (switching/fluctuation mixing method). As illustrated in FIG. 15, when the average load factor i_{avg_pu} is equal to or less than the switching threshold αₜₕᵣ, the correction value is distributed by the fluctuation method as in the second example, and when the average load factor i_{avg_pu} is greater than the switching threshold αₜₕᵣ, the correction value is distributed by the switching method as in the first example. That is, when i_{avg_pu} > αₜₕᵣ, the slope correction difference Δi_{j_R} is set to the difference i_{avg_pu} - i_{j_pu} between the average load factor and the load factor and the intercept correction difference Δi_{j_V} is set to 0, and in other cases (i_{avg_pu} ≤ αₜₕᵣ), the slope correction difference Δi_{j_R} is set to (1 - αₜₕᵣ) (i_{avg_pu} - i_{j_pu}) and Δi_{j_V} is set to {1 - (i_{avg_pu})/(1 - αₜₕᵣ)} (i_{avg_pu} - i_{j_pu}).

The DC power supply system 100 according to the fourth example can suppress a current unbalance amount during load fluctuations and suppress overshooting.

### [First Modified Example]

Although each of the above-described examples has described a droop control in which the storage battery 13 connected to the first DC-DC converter 11 and the storage battery 23 connected to the second DC-DC converter 21 are discharged, the same droop control can be performed also when the storage battery 13 and the storage battery 23 are charged, such as when DC power is supplied from a DC power supply source connected to the DC bus DCb to the storage battery 13 and the storage battery 23. The DC power supply source may be, but is not limited to, a device including an AC-DC converter that converts, into DC power, AC power supplied from an AC power source such as a commercial power system connected to the DC bus DCb, or a device including a DC power source such as a storage battery, a solar battery, and a fuel cell and a DC-DC converter that steps-up, steps-up and steps-down, or steps-down the output of the DC power source.

In the droop control in each of the above-described examples, when the storage battery 13 and the storage battery 23 are discharged, the output current io₁ of the first DC-DC converter 11 and the output current io₂ of the second DC-DC converter 21 flow in the arrow direction illustrated in FIG. 1, and have positive values. In contrast, when the storage battery 13 and the storage battery 23 are discharged, the output current io₁ of the first DC-DC converter 11 and the output current io₂ of the second DC-DC converter 21 flow in a direction opposite to the arrow direction illustrated in FIG. 1. In this way, when the current flows in the direction opposite to the arrow direction illustrated in FIG. 1, each output current is assumed to have a negative value. In this case, the droop characteristics of the first DC-DC converter 11 and the second DC-DC converter 21 have a shape in which the graph of the droop characteristic of the above-described example is inverted in sign around the vertical axis at i (output current) = 0.

### [Second Modified Example]

Although each of the above-described examples has described a droop characteristic that defines the relationship between the output voltage vo₂ and the output current io₂ detected by the second DC-DC converter output current detection circuit 25, regarding the droop characteristic, the correction of the droop characteristic can be performed in the same manner also for the droop control according to the droop characteristic that defines the relationship between output power detection (here, po₂) and the output voltage. A DC power supply system that performs such a droop control is provided with, for example, a second DC-DC converter output power acquiring unit that calculates the output power po₂ by multiplying the output current io₂ detected by the second DC-DC converter output current detection circuit 25 by the output voltage vo₂ detected by the second DC-DC converter output voltage detection circuit 24. Since details of the droop control and the correction of the droop characteristic are the same as those of each of the above-described examples using the output current, descriptions thereof are omitted. The output power po₂ corresponds to the power, physical quantity, and first-type physical quantity of the present invention, and the second DC-DC converter output power acquiring unit corresponds to a physical quantity acquiring unit of the present invention.

### [Third Modified Example]

In each of the above-described examples, as illustrated in FIG. 1 according to the first example, the second DC-DC converter output current detection circuit 25 and the second DC-DC converter output voltage detection circuit 24 are provided at the output line PwL2 of the second DC-DC converter 21, and the current flowing through the output line PwL2 and the voltage between the output lines PwL2 are detected and acquired.
However, the configuration that can acquire the output voltage and the output current of the second DC-DC converter 21 is not limited thereto. That is, the output current and output voltage can be acquired by performing predetermined conversion and estimation from various detection values and information related to the second DC-DC converter 21 (the same applies to other DC-DC converters constituting the DC power supply system 100).

For example, since the second DC-DC converter 21 retains the duty value of its own PWM, a step-up converter can perform conversion to the output voltage and output current from a step-up ratio and the like. In the case of the step-up converter, the same applies to the average value of an input current and the average value of an inductor current. When losses and the like can be evaluated in advance, the accuracy of the conversion can be further improved.
In addition, by detecting the current flowing through components such as the inductor, switch, and capacitor of the second DC-DC converter 21, input and output voltages can also be estimated.

Accordingly, the configuration corresponding to the voltage acquiring unit and the physical quantity acquiring unit of the present invention only needs to be capable of ultimately acquiring the voltage and physical quantity of the present invention. It is not limited to the configurations described in the examples but also includes configurations in which the voltage and physical quantity are acquired through conversion or estimation from various detected values and information.

### [Fourth Modified Example]

In each of the above-described examples, the first DC-DC converter 11 and the second DC-DC converter 21 included in the DC power supply system 100 perform the droop control including the correction of the droop characteristic described in each example, but the plurality of DC-DC converters included in the DC power supply system 100 may include a DC-DC converter that does not include the droop characteristic correction calculation unit in the control unit and does not perform the droop control including the correction of the droop characteristic described in each example.
Such a DC-DC converter that does not include the droop characteristic correction calculation unit in the control unit and does not perform the droop control including the correction of the droop characteristic described in each example corresponds to a second-type power conversion device of the present invention. In addition, in the configuration of such a DC-DC converter, a configuration corresponding to the control unit 22 of the second DC-DC converter 21 corresponds to a second-type control unit of the present invention, and a configuration corresponding to the droop gain (kd2) multiplier 225 and the addition point 228 corresponds to a second-type droop control unit of the present invention. A droop characteristic represented by the droop gain (kd2) corresponds to a second-type droop characteristic of the present invention, and a droop control performed according to the droop characteristic corresponds to a second-type droop control of the present invention. In addition, in the configuration of such a DC-DC converter, a configuration corresponding to the second DC DC-converter output current detection circuit 25 corresponds to a second-type physical quantity acquiring unit of the present invention, and an output current corresponding to the output current io₂ flowing through the output line PwL2 corresponds to a current flowing through the second-type power conversion device and a second-type physical quantity of the present invention. In addition, in the configuration of such a DC-DC converter, a configuration corresponding to the output line PwL2 corresponds to a second-type power line of the present invention, an output voltage corresponding to the output voltage vo₂ that is the voltage between the output lines PwL2 corresponds to a second-type voltage of the present invention, and a configuration corresponding to the second DC-DC converter output voltage detection circuit 24 corresponds to a second-type voltage acquiring unit of the present invention.

### [Supplementary Note 1]

A power conversion device (21) connected to a DC power source (23), configured to step-up, step-up and step-down, or step-down DC power and output the DC power, and connected to a load (3), through a power line (PwL2), in parallel with other power conversion devices (11) respectively connected to other DC power sources (13) and configured to step-up, step-up and step-down, or step-down DC power, the power conversion device (21) including:
a physical quantity acquiring unit (25) configured to acquire a physical quantity that is power or current flowing through the power conversion device (21);
a voltage acquiring unit (24) configured to acquire a voltage of the power line (PwL2); and
a control unit (22) configured to control the voltage,
wherein the control unit (22) includes:
   a droop control unit (225, 228) configured to perform a droop control of drooping the voltage of the power line according to a droop characteristic that defines a relationship between the physical quantity and the voltage; and
   a correction distribution unit (221) configured to distribute a correction of the droop characteristic into a correction of a slope of the droop characteristic with respect to the physical quantity and a correction of an intercept that is a predetermined value of the voltage in the droop characteristic with respect to the physical quantity.

### [Supplementary Note 2]

The power conversion device (21) according to Supplementary Note 1, further including: another-device load factor acquiring unit (26) configured to acquire another load factor by dividing the physical quantity flowing through a corresponding one of the other power conversion devices (11) by a rating of a corresponding one of the other power conversion devices,
wherein the correction distribution unit (221) distributes the correction of the droop characteristic into the correction of the slope of the droop characteristic with respect to the physical quantity and the correction of the intercept of the droop characteristic, according to a system average load factor obtained by dividing, by a sum of the number of the power conversion device (21) and the other power conversion devices (11), a sum of the other load factor and a load factor obtained by dividing the physical quantity by a rating of the physical quantity of the power conversion device (21).

### [Supplementary Note 3]

The power conversion device (21) according to Supplementary Note 2, wherein the correction distribution unit (221) distributes the correction of the droop characteristic into the correction of the slope of the droop characteristic with respect to the physical quantity and the correction of the intercept of the droop characteristic on the basis of a comparison between a predetermined threshold and the system average load factor.

### [Supplementary Note 4]

The power conversion device (21) according to Supplementary Note 2, wherein the correction distribution unit (221) distributes the correction of the droop characteristic into the correction of the slope of the droop characteristic with respect to the physical quantity and the correction of the intercept of the droop characteristic, according to the system average load factor.

### [Supplementary Note 5]

The power conversion device (21) according to Supplementary Notes 1 to 4, wherein the control unit (22) includes a correction range limiting unit (224) configured to limit a range of the correction of the droop characteristic.

### [Supplementary Note 6]

A DC power supply system (100) including a plurality of power conversion devices (11, 21) each connected to a DC power source, configured to step-up, step-up and step-down, or step-down DC power and supply the DC power to a load (3), and connected in parallel with the load, wherein the plurality of power conversion devices (11, 21) include a first-type power conversion device (21),
the first-type power conversion device (21) includes
a physical quantity acquiring unit (25) configured to acquire a first-type physical quantity that is power or current flowing through the first-type power conversion device (21);
a voltage acquiring unit (24) configured to acquire a voltage of a power line (PwL2) that connects the first-type power conversion device (21) and the load (3); and a control unit (22) configured to control the voltage, and
the control unit (22) includes
   a droop control unit (225, 228) configured to perform a droop control of drooping the voltage of the power line according to a droop characteristic that defines a relationship between the first-type physical quantity and the voltage; and
   a correction distribution unit (221) configured to distribute a correction of the droop characteristic into a correction of a slope of the droop characteristic with respect to the first-type physical quantity and a correction of an intercept that is a predetermined value of the voltage in the droop characteristic with respect to the first-type physical quantity.

### [Supplementary Note 7]

The DC power supply system (100) according to Supplementary Note 6, wherein the first-type power conversion device (21) includes another-device load factor acquiring unit (26) configured to acquire another load factor by dividing either power or current flowing through a corresponding one of other power conversion devices (11) included in the DC power supply system (100) by a rating of the corresponding one of the other power conversion devices, and
the correction distribution unit (221) distributes the correction of the droop characteristic into the correction of the slope of the droop characteristic with respect to the first-type physical quantity and the correction of the intercept of the droop characteristic, according to a system average load factor obtained by dividing, by a sum of the number of the power conversion device (21) and the other power conversion devices (11), a sum of the other load factor and a load factor obtained by dividing the first-type physical quantity by a rating of the first-type physical quantity of the first-type power conversion device (21).

### [Supplementary Note 8]

The DC power supply system (100) according to Supplementary note 7, wherein the correction distribution unit (221) distributes the correction of the droop characteristic into the correction of the slope of the droop characteristic with respect to the first-type physical quantity and the correction of the intercept of the droop characteristic on the basis of a comparison between a predetermined threshold and the system average load factor.

### [Supplementary Note 9]

The DC power supply system (100) according to Supplementary Note 7, wherein the correction distribution unit (221) distributes the correction of the droop characteristic into the correction of the slope of the droop characteristic with respect to the first-type physical quantity and the correction of the intercept of the droop characteristic, according to the system average load factor.

### [Supplementary Note 10]

The DC power supply system (100) according to Supplementary Notes 6 to 9, wherein the control unit (22) includes a correction range limiting unit (224) configured to limit a range of the correction of the droop characteristic.

### [Supplementary Note 11]

The DC power supply system (100) according to Supplementary Notes 6 to 10, wherein the plurality of power conversion devices (11, 21) include a second-type power conversion device (11),
the second-type power conversion device (11) includes
a second-type physical quantity acquiring unit configured to acquire a second-type physical quantity that is power or current flowing through the second-type power conversion device,
a second-type voltage acquiring unit configured to acquire a second-type voltage that is a voltage of a second-type power line that connects the second-type power conversion device and the load, and
a second-type control unit configured to control the second-type voltage, and
the second-type control unit includes a second-type droop control unit configured to perform a second-type droop control of drooping the second-type voltage according to a second-type droop characteristic that defines a relationship between the second-type physical quantity and the second-type voltage, and
does not include a correction distribution unit configured to distribute a correction of the second-type droop characteristic into a correction of a slope of the second-type droop characteristic with respect to the second-type physical quantity and a correction of an intercept that is a predetermined value of the second-type voltage in the second-type droop characteristic with respect to the second-type physical quantity.

### REFERENCE SIGNS

3: Load
11: First DC-DC converter
21: Second DC-DC converter
22: Control unit
221: Correction value distribution calculation unit
225: Droop gain multiplier
227, 228: Addition point
100: DC power supply system

## Claims

1. A power conversion device connected to a DC power source, configured to step-up, step-up and step-down, or step-down DC power and output the DC power, and connected to a load, through a power line, in parallel with other power conversion devices respectively connected to other DC power sources and configured to step-up, step-up and step-down, or step-down DC power, the power conversion device comprising:
a physical quantity acquiring unit configured to acquire a physical quantity being power or current flowing through the power conversion device;
a voltage acquiring unit configured to acquire a voltage of the power line; and
a control unit configured to control the voltage, wherein
the control unit includes
a droop control unit configured to perform a droop control of drooping the voltage of the power line, according to a droop characteristic defining a relationship between the physical quantity and the voltage; and
a correction distribution unit configured to distribute a correction of the droop characteristic into a correction of a slope of the droop characteristic with respect to the physical quantity and a correction of an intercept being a predetermined value of the voltage in the droop characteristic with respect to the physical quantity.

2. The power conversion device according to claim 1, further comprising:
another-device load factor acquiring unit configured to acquire another load factor by dividing the physical quantity flowing through a corresponding one of the other power conversion devices by a rating of the corresponding one of the other power conversion devices, wherein
the correction distribution unit distributes the correction of the droop characteristic into the correction of the slope of the droop characteristic with respect to the physical quantity and the correction of the intercept of the droop characteristic, according to a system average load factor obtained by dividing, by a sum of the number of the power conversion device and the other power conversion devices, a sum of the other load factor and a load factor obtained by dividing the physical quantity by a rating of the physical quantity of the power conversion device.

3. The power conversion device according to claim 2, wherein the correction distribution unit distributes the correction of the droop characteristic into the correction of the slope of the droop characteristic with respect to the physical quantity and the correction of the intercept of the droop characteristic on the basis of a comparison between a predetermined threshold and the system average load factor.

4. The power conversion device according to claim 2, wherein the correction distribution unit distributes the correction of the droop characteristic into the correction of the slope of the droop characteristic with respect to the physical quantity and the correction of the intercept of the droop characteristic, according to the system average load factor.

5. The power conversion device according to any one of claims 1 to 4, wherein the control unit includes a correction range limiting unit configured to limit a range of the correction of the droop characteristic.

6. A DC power supply system including a plurality of power conversion devices each connected to a DC power source, configured to step-up, step-up and step-down, or step-down DC power and supply the DC power to a load, and connected in parallel with the load, wherein
the plurality of power conversion devices include a first-type power conversion device,
the first-type power conversion device includes
a physical quantity acquiring unit configured to acquire a first-type physical quantity being power or current flowing through the first-type power conversion device;
a voltage acquiring unit configured to acquire a voltage of a power line configured to connect the first-type power conversion device and the load; and
a control unit configured to control the voltage, and
the control unit includes
a droop control unit configured to perform a droop control of drooping the voltage of the power line, according to a droop characteristic defining a relationship between the first-type physical quantity and the voltage; and
a correction distribution unit configured to distribute a correction of the droop characteristic into a correction of a slope of the droop characteristic with respect to the first-type physical quantity and a correction of an intercept being a predetermined value of the voltage in the droop characteristic with respect to the first-type physical quantity.

7. The DC power supply system according to claim 6, wherein
the first-type power conversion device includes another-device load factor acquiring unit configured to acquire another load factor by dividing either power or current flowing through a corresponding one of other power conversion devices included in the DC power supply system by a rating of the corresponding one of the other power conversion devices, and
the correction distribution unit distributes the correction of the droop characteristic into the correction of the slope of the droop characteristic with respect to the first-type physical quantity and the correction of the intercept of the droop characteristic, according to a system average load factor obtained by dividing, by a sum of the number of the power conversion device and the other power conversion devices, a sum of the other load factor and a load factor obtained by dividing the first-type physical quantity by a rating of the first-type physical quantity of the first-type power conversion device.

8. The DC power supply system according to claim 7, wherein the correction distribution unit distributes the correction of the droop characteristic into the correction of the slope of the droop characteristic with respect to the first-type physical quantity and the correction of the intercept of the droop characteristic on the basis of a comparison between a predetermined threshold and the system average load factor.

9. The DC power supply system according to claim 7, wherein the correction distribution unit distributes the correction of the droop characteristic into the correction of the slope of the droop characteristic with respect to the first-type physical quantity and the correction of the intercept of the droop characteristic, according to the system average load factor.

10. The DC power supply system according to any one of claims 6 to 9, wherein the control unit includes a correction range limiting unit configured to limit a range of the correction of the droop characteristic.

11. The DC power supply system according to any one of claims 6 to 9, wherein
the plurality of power conversion devices include a second-type power conversion device,
the second-type power conversion device includes
a second-type physical quantity acquiring unit configured to acquire a second-type physical quantity being power or current flowing through the second-type power conversion device;
a second-type voltage acquiring unit configured to acquire a second-type voltage being a voltage of a second-type power line configured to connect the second-type power conversion device and the load; and
a second-type control unit configured to control the second-type voltage, and
the second-type control unit
includes a second-type droop control unit configured to perform a second-type droop control of drooping the second-type voltage, according to a second-type droop characteristic defining a relationship between the second-type physical quantity and the second-type voltage, and
does not include a correction distribution unit configured to distribute a correction of the second-type droop characteristic into a correction of a slope of the second-type droop characteristic with respect to the second-type physical quantity and a correction of an intercept being a predetermined value of the second-type voltage in the second-type droop characteristic with respect to the second-type physical quantity.
